# EUROPÄISCHE PATENTSCHRIFT

(11) **EP 3 100 181 B1**
(45) Veröffentlichungstag und Bekanntmachung des Hinweises auf die Patenterteilung: **10.01.2018**
(21) Anmeldenummer: 15704481.9
(22) Anmeldetag: 30.01.2015
(51) Int. Cl.: G06F 17/30, G06Q 30/02

(54) **SYSTEM UND VERFAHREN ZUM UNTERBINDEN EINER AUSLIEFERUNG VON WERBEINHALTEN**
SYSTEM AND METHOD FOR PREVENTING A DELIVERY OF ADVERTISING CONTENT
SYSTÈME ET PROCÉDÉ POUR FAIRE CESSER UNE LIVRAISON DE CONTENUS PUBLICITAIRES

(30) Priorität: 30.01.2014 DE 102014101174
(43) Veröffentlichungstag der Anmeldung: 07.12.2016
(73) Patentinhaber: Netzwelt GmbH, 22767 Hamburg (DE)
(72) Erfinder: HOTTES, Dirk, 21227 Bendestorf (DE); HOTTES, Sascha, 22607 Hamburg (DE)
(74) Vertreter: 2s-ip Schramm Schneider Bertagnoll Patent- und Rechtsanwälte Part mbB
(86) Internationale Anmeldenummer: PCT/EP2015/051918
(87) Internationale Veröffentlichungsnummer: WO 2015/114090

(56) Entgegenhaltungen:
- WO-A1-2011/119676
- US-A1- 2013 132 211
- US-B1- 8 527 504
- Anonymous: "Adblock Plus - Features", , 24. Februar 2013 (2013-02-24), XP055195807, Gefunden im Internet: URL:http://web.archive.org/web/20130224192 853/http://adblockplus.org/en/features [gefunden am 2015-06-15]
- Anonymous: "FAQ - Adblock Plus internals", , 9. März 2013 (2013-03-09), XP55195668, Gefunden im Internet: URL:http://web.archive.org/web/20130309011 531/http://adblockplus.org/en/faq_internal [gefunden am 2015-06-15]
- Anonymous: "WebSocket - Wikipedia, the free encyclopedia", , 27. Januar 2014 (2014-01-27), XP055195687, Gefunden im Internet: URL:https://en.wikipedia.org/w/index.php?t itle=WebSocket&oldid=592573833 [gefunden am 2015-06-15]

## Beschreibung

### Gebiet der Erfindung

Die Erfindung betrifft ein Verfahren und ein System zum Unterbinden einer Auslieferung von Werbeinhalten und/oder Werbemitteln, die an einer Clientsoftware, etwa Browser, in einem elektronischen Dokument, beispielsweise Webseite zur Anzeige gebracht werden sollen.

### Hintergrund der Erfindung und Stand der Technik

Es ist allgemein bekannt, in elektronischen Dokumenten, etwa Webseiten, Werbeinhalte bzw. Werbemittel einzublenden. Der Betreiber der Website kann durch das Einblenden der Werbeinhalte zusätzliche Einnahmen generieren, beispielsweise wenn ein Benutzer der Webseite die Werbung anklickt. Inhalteanbieter, die ihre Inhalte auf Webseiten publizieren, finanzieren sich in den meisten Fällen über die auf der Webseite zusätzlich eingeblendete Werbung.

Die Betreiber solcher Webseiten verwalten die eingeblendete Werbung in den meisten Fällen nicht selbst, sondern beziehen diese von einem externen Werbemittelvermarkter, der die verfügbaren Werbemittel bzw. Werbeinhalte auf einem Werbemittelserver zum Abruf bereithält. Der Betreiber der Webseite muss lediglich einen Verweis auf den einzublendenden Werbeinhalt auf dem Werbemittelserver in die Webseite einfügen, sodass beim Abruf der Webseite, beispielsweise in einem Internetbrowser, die Webseite von dem Webserver des Betreibers der Webseite und die Werbeinhalte von dem Werbemittelserver des Werbemittelvermarkters geladen werden.

Das Laden der Werbeinhalte von dem Werbemittelserver des Werbemittelvermarkters kann unter Verwendung des Websocket-Protokolls erfolgen. Hierbei wird die Webseite in herkömmlicher Weise unter Verwendung des HTTP-Protokolls von dem Webserver geladen. Während des Ladens der Webseite oder nach dem Laden der Webseite kann ein in die Webseite eingebundenes Script die anzuzeigenden Werbeinhalte unter Verwendung des Websocket-Protokolls von einem Werbemittelserver nachladen und in der geladenen Webseite zur Anzeige bringen. Nachteilig hierbei ist allerdings, dass die Werbeinhalte auch dann eingeblendet werden, wenn der Benutzer, der die Webseite abruft, diese Werbeinhalte gar nicht sehen möchte, um beispielsweise die zu übertragende Datenmenge zu reduzieren.

Die Dokumente XP055195807 und XP55195668 offenbaren eine Clienteinrichtung zum Unterbinden einer Auslieferung von Werbeinhalten u.a. durch das Blocken von Verbindungen zu unzulässigen URIs.

Ferner ist es bekannt, zahlenden Benutzern Webseiten ohne Werbemittel bzw. Werbeinhalte auszuliefern. Sofern die Webseiten allerdings auch von nicht zahlenden Benutzern abgerufen werden können, hat dies den Nachteil, dass die Webseiten in zwei Versionen zur Verfügung gestellt werden müssen, nämlich in einer Version ohne Werbeinhalte und in einer Version mit Werbeinhalte. Damit einhergeht ein erhöhter Aufwand für die Pflege der Webseiten. Auf Benutzerseite ergibt sich der Nachteil, dass sich der zahlende Benutzer gegenüber dem Anbieter der Webseiten authentifizieren muss, damit der Betreiber der Webseiten entscheiden kann, ob eine abgerufene Webseite mit oder ohne Werbeinhalte ausgeliefert wird. Dies kann beispielsweise mittels eines Logins des Benutzers erfolgen. Alternativ können an der Clienteinrichtung des Benutzers beispielsweise sogenannte Cookies gespeichert werden, die von dem Betreiber der Webseite ausgelesen werden können und die Informationen darüber enthalten, ob eine abgerufene Webseite mit oder ohne Werbeinhalte auszuliefern ist. Sind solche Cookies nicht verfügbar, weil beispielsweise der Benutzer das Speichern von Cookies auf seiner Clienteinrichtung nicht erlaubt, werden die von dem Benutzer angeforderten Webseiten im Zweifel immer mit den Werbeinhalten ausgeliefert, selbst wenn der Benutzer diese Werbeinhalte nicht möchte.

### Aufgabe der Erfindung

Aufgabe der vorliegenden Erfindung ist es daher, ein System und ein Verfahren bereitzustellen, welche die aus dem Stand der Technik bekannten Nachteile zumindest teilweise vermeiden und die es ermöglichen, das Einblenden von Werbemitteln bzw. Werbeinhalten in einem elektronischen Dokument, etwa Webseite, auf einfache Art und Weise zuverlässig zu verhindern und/oder zu steuern.

### Erfindungsgemäße Lösung

Diese Aufgabe wird erfindungsgemäß durch ein Verfahren, eine Clienteinrichtung und eine Datenträgereinrichtung nach den unabhängigen Ansprüchen gelöst. Vorteilhafte Ausgestaltungen und Weiterbildungen der Erfindung sind in den jeweiligen abhängigen Ansprüchen angegeben.

Bereitgestellt wird demnach ein Verfahren zum Unterbinden einer Auslieferung von Werbeinhalten und/oder Werbemitteln von einer Servereinrichtung an eine Clienteinrichtung, wobei ein Werbeblocker der Clienteinrichtung
(a) Verbindungsaufbauversuche der Clienteinrichtung zu der Servereinrichtung überwacht,
(b) bei einem erkannten Verbindungsaufbauversuch ermittelt, ob für den Verbindungsaufbauversuch ein Kommunikationsprotokoll verwendet wird, das für den Aufbau einer Vollduplex-Verbindung zwischen der Servereinrichtung und der Clienteinrichtung vorgesehen ist,
(c) falls für den Verbindungsaufbauversuch ein Kommunikationsprotokoll verwendet wird, das für den Aufbau einer Vollduplex-Verbindung vorgesehen ist, für den Uniform Resource Identifier (URI) des Verbindungsaufbauversuches überprüft, ob dieser für den Verbindungsaufbau verwendet werden darf, und
(d) falls die Prüfung ergibt, dass der Uniform Resource Identifier (URI) für den Verbindungsaufbau nicht verwendet werden darf, den Verbindungsaufbauversuch beendet, und anderenfalls den Verbindungsaufbauversuch zur Servereinrichtung zulässt.

Bereitgestellt wird des Weiteren ein Verfahren zum Unterbinden einer Auslieferung von Werbeinhalten und/oder Werbemitteln von einer Servereinrichtung an eine Clienteinrichtung über eine Kommunikationsverbindung, wobei für die Kommunikationsverbindung ein Kommunikationsprotokoll verwendet wird, das eine Vollduplex-Verbindung zwischen der Servereinrichtung und der Clienteinrichtung vorsieht, wobei ein Werbeblocker der Clienteinrichtung
(a) bei einem Verbindungsaufbauversuch, für den das Kommunikationsprotokoll verwendet wird, zwischen der Clienteinrichtung und der Servereinrichtung überprüft, ob der Uniform Resource Identifier (URI), der für den Verbindungsaufbauversuch verwendet wird, für den Verbindungsaufbau verwendet werden darf, und
(b) falls die Prüfung ergibt, dass der Uniform Resource Identifier (URI) für den Verbindungsaufbau nicht verwendet werden darf, den Verbindungsaufbauversuch beendet oder eine bereits aufgebaute Verbindung unterbricht.

Erfindungsgemäß ist es besonders vorteilhaft, wenn das Kommunikationsprotokoll das Web-Socket-Protokoll ist.

Mit dem HTML-Protokoll kann hingegen lediglich eine Halbduplex-Verbindung eingerichtet werden.

Der Werbeblocker der Clienteinrichtung kann
(a) Verbindungsaufbauversuche der Clienteinrichtung zu der Servereinrichtung überwachen,
(b) bei einem erkannten Verbindungsaufbauversuch ermitteln, ob für den Verbindungsaufbauversuch das Websocket-Protokoll verwendet wird,
(c) falls für den Verbindungsaufbauversuch das Websocket-Protokoll verwendet wird, für den Uniform Ressource Identifier (URI bzw. URL) des Verbindungsaufbauversuchers überprüfen, ob dieser für den Verbindungsaufbau verwendet werden darf, und
(d) falls die Prüfung ergibt, dass der Uniform Ressource Identifier für den Verbindungsaufbau nicht verwendet werden darf, den Verbindungsaufbauversuch beenden und anderenfalls den Verbindungsaufbauversuch zur Servereinrichtung zulassen.

Damit wird die Übertragung von Werbemitteln bzw. Werbeinhalten von einer Servereinrichtung an die Clienteinrichtung unterbunden, wenn für das Abfragen der Werbeinhalte das Websocket-Protokoll (oder ein anderes Kommunikationsprotokoll, das eine Vollduplex-Verbindung ermöglicht) verwendet wird und die Adresse der Servereinrichtung, die die Werbeinhalte bereitstellt, für ein Abrufen der Werbeinhalte nicht verwendet werden darf. Erfindungsgemäß wird dabei bereits der Verbindungsaufbau zu der Servereinrichtung verhindert, sodass die Werbeinhalte erst gar nicht an die Clienteinrichtung übertragen werden, was die an die Clienteinrichtung übertragene Datenmenge erheblich reduzieren kann.

Das Überwachen der Verbindungsaufbauversuche kann von einem Event-Listener durchgeführt werden, der an der Clienteinrichtung für Verbindungsaufbau-Ereignisse registriert worden ist.

Der Werbeblocker kann, falls für den Verbindungsaufbauversuch nicht das Web-socket-Protokoll verwendet wird, den Verbindungsaufbauversuch zur Servereinrichtung zulassen. Damit ist gewährleistet, dass nur solche Werbeinhalte nicht an die Clienteinrichtung übertragen werden, die unter Verwendung des Websocket-Protokolls angefragt werden.

In einer Ausgestaltung des erfindungsgemäßen Verfahrens kann der Werbeblocker in einem Schritt überprüfen, ob Verbindungsaufbauversuche generell zugelassen werden und falls diese Überprüfung positiv ist, kann der Werbeblocker den Verbindungsaufbauversuch zur Servereinrichtung zulassen.

Bei der Überprüfung, ob Verbindungsaufbauversuche generell zugelassen werden, kann eine in der Clienteinrichtung gespeicherte eindeutige Kennung an einen Drittserver übertragen werden und als Antwort auf die übertragene eindeutige Kennung kann von dem Drittserver eine Rückgabenachricht empfangen werden, die eine Information darüber umfasst, ob die Überprüfung positiv ist. Die eindeutige Kennung kann beispielsweise eine Benutzerkennung umfassen.

Bei der Überprüfung, ob der Uniform Ressource Identifier des Verbindungsaufbauversuches für den Verbindungsaufbau verwendet werden darf, kann eine globale Filterprüfung durchgeführt werden, mit der ermittelt wird, ob der Uniform Ressource Identifier eine oder mehrere globale Filterregeln erfüllt, und, falls das Ergebnis der globalen Filterprüfung positiv ist, kann der Verbindungsaufbauversuch beendet werden.

In einer Ausgestaltung der Erfindung kann bei der globalen Filterprüfung der Uniform Ressource Identifier an eine Servereinrichtung übertragen werden, in der die globalen Filterregeln gespeichert sind. Von dieser Servereinrichtung kann eine Nachricht empfangen werden, die Informationen darüber umfasst, ob der Uniform Ressource Identifier eine oder mehrere globale Filterregeln erfüllt.

In einer Ausgestaltung der Erfindung kann bei der Überprüfung, ob der Uniform Ressource Identifier des Verbindungsaufbauversuches für den Verbindungsaufbau verwendet werden darf, eine lokale Filterprüfung durchgeführt werden, bei der ermittelt wird, ob der Uniform Ressource Identifier eine oder mehrere lokale Filterregeln erfüllt, und, falls das Ergebnis der lokalen Filterprüfung positiv ist, kann der Verbindungsaufbauversuch beendet werden. Die lokalen Filterregeln können in der Clienteinrichtung gespeichert sein.

In einer vorteilhaften Ausgestaltung wird die globale Filterprüfung vor der lokalen Filterprüfung durchgeführt. Damit kann beispielsweise der lokalen Filterprüfung mehr Gewicht gegeben werden als der globalen Filterprüfung. Beispielsweise kann die globale Filterprüfung ergeben, dass eine Uniform Ressource Identifier für einen Verbindungsaufbauversuch nicht verwendet werden darf, während die lokale Filterprüfung ergibt, dass genau diese Uniform Ressource Identifier für einen Verbindungsaufbauversuch verwendet werden darf. Dem Ergebnis der lokalen Filterprüfung kann hierbei der Vorzug gegeben werden.

Die Servereinrichtung kann einen Werbemittelserver und/oder einen Socket-Server umfassen, die angepasst sind, eine Socket-Verbindung zu der Clienteinrichtung aufzubauen.

In einer vorteilhaften Ausgestaltung der Erfindung kann der Werbeblocker ein Plug-In, insbesondere ein Plug-In eines Internetbrowsers und/oder eine Toolbar, insbesondere eine Toolbar eines Internetbrowsers umfassen.

Bereitgestellt wird des Weiteren eine Clienteinrichtung, die einen Werbeblocker aufweist, der so eingerichtet, dass er das erfindungsgemäße Verfahren ausführen kann.

Bereitgestellt wird des Weiteren Clienteinrichtung zum Anzeigen von elektronischen Dokumenten, insbesondere HTML-Dokumente, wobei die Clienteinrichtung einen Werbeblocker umfasst, der so eingerichtet ist, dass er
(a) Verbindungsaufbauversuche der Clienteinrichtung zu einer Servereinrichtung überwacht,
(b) bei einem erkannten Verbindungsaufbauversuch ermittelt, ob für den Verbindungsaufbauversuch ein Kommunikationsprotokoll verwendet wird, das für den Aufbau einer Vollduplex-Verbindung zwischen der Servereinrichtung und der Clienteinrichtung vorgesehen ist,
(c) falls für den Verbindungsaufbauversuch ein Kommunikationsprotokoll verwendet wird, das für den Aufbau einer Vollduplex-Verbindung vorgesehen ist, für den Uniform Resource Identifier (URI) des Verbindungsaufbauversuches überprüft, ob dieser für den Verbindungsaufbau verwendet werden darf, und
(d) falls die Prüfung ergibt, dass der Uniform Resource Identifier (URI) für den Verbindungsaufbau nicht verwendet werden darf, den Verbindungsaufbauversuch beendet, und anderenfalls den Verbindungsaufbauversuch zur Servereinrichtung zulässt.

Ferner wird bereitgestellt eine Clienteinrichtung zum Anzeigen von elektronischen Dokumenten, insbesondere HTML-Dokumente, wobei die Clienteinrichtung einen Werbeblocker umfasst, der so eingerichtet ist, dass er
(a) bei einem Verbindungsaufbauversuch zwischen der Clienteinrichtung und der Servereinrichtung, für den ein Kommunikationsprotokoll verwendet wird, das für den Aufbau einer Vollduplex-Verbindung zwischen der Servereinrichtung und der Clienteinrichtung vorgesehen ist, überprüft, ob der Uniform Resource Identifier (URI), der für den Verbindungsaufbauversuch verwendet wird, für den Verbindungsaufbau verwendet werden darf, und
(b) falls die Prüfung ergibt, dass der Uniform Resource Identifier (URI) für den Verbindungsaufbau nicht verwendet werden darf, den Verbindungsaufbauversuch beendet oder eine bereits aufgebaute Verbindung unterbricht.

Auch hier ist es vorteilhaft, wenn das Kommunikationsprotokoll das Web-Socket-Protokoll ist.

Die Clienteinrichtung kann einen Internetbrowser und/oder einen mobilen Internetbrowser umfassen, wobei der Werbeblocker als Plug-In und/oder als Toolbar des Internetbrowsers und/oder mobilen Internetbrowsers ausgestaltet ist.

Die Clienteinrichtung kann ein Personal Computer, ein Smartphone, ein Tablet Computer, ein Notebook oder ein tragbares oder stationäres Gerät zur Anzeige von elektronischen Dokumenten sein.

Ferner wird durch die Erfindung eine Datenträgereinrichtung mit darauf gespeicherten Daten oder für die Übertragung über das Internet geeignete, Daten repräsentierende Signalfolge bereitgestellt, wobei die Daten ein Werbeblockerprogramm zum Ablauf auf einer Clienteinrichtung zur Anzeige von elektronischen Dokumenten darstellen, wobei das Werbeblockerprogramm so ausgebildet ist, dass es
(a) Verbindungsaufbauversuche der Clienteinrichtung zu einer Servereinrichtung überwacht,
(b) bei einem erkannten Verbindungsaufbauversuch ermittelt, ob für den Verbindungsaufbauversuch das Websocket-Protokoll verwendet wird,
(c) falls für den Verbindungsaufbauversuch das Websocket-Protokoll verwendet wird, für den Uniform Ressource Identifier des Verbindungsaufbauversuches überprüft, ob dieser für den Verbindungsaufbauversuch verwendet werden darf, und
(d) falls die Prüfung ergibt, dass der Uniform Ressource Identifier für den Verbindungsaufbau nicht verwendet werden darf, den Verbindungsaufbauversuch beendet, und anderenfalls den Verbindungsaufbauversuch zur Servereinrichtung zulässt.

Die Datenträgereinrichtung bzw. das Werbeblockerprogramm kann weiter so ausgebildet sein, dass das Werbeblockerprogramm das erfindungsgemäße Verfahren zur Ausführung bringt.

### Kurzbeschreibung der Figuren

Weitere Einzelheiten und Merkmale der Erfindung sowie konkrete Ausführungsbeispiele der Erfindung ergeben sich aus der nachfolgenden Beschreibung in Verbindung mit der Zeichnung. Es zeigt:
- Fig. 1: ein System zum Ausliefern von Werbeinhalten bzw. Werbemitteln, wel-ches für das Ausliefern von Werbeinhalten das Websocket-Protokoll ver-wendet;
- Fig. 2: ein Ablaufdiagramm eines erfindungsgemäßen Verfahrens zum Unterbin-den einer Auslieferung von Werbeinhalten und/oder Werbemitteln an eine Clienteinrichtung; und
- Fig. 3: ein Ablaufdiagramm für den in Fig. 2 gezeigten Schritt S30.

### Detaillierte Beschreibung der Erfindung

Im Folgenden wird die Erfindung anhand einer Webseite im HTML-Format, die in einem Internetbrowser bzw. Webbrowser zur Anzeige gebracht wird, näher beschrieben. Das erfindungsgemäße Verfahren kann aber auch auf mobilen Endgeräten, beispielsweise Smartphones oder Tablet-Computern ausgeführt werden, bei denen elektronische Dokumente nicht notwendigerweise im HTML-Format zur Anzeige gebracht werden. Beispielsweise können elektronische Dokumente und darin einzubettende Werbeinhalte in einer sogenannten "App" auf einem mobilen Endgerät zur Anzeige gebracht werden. Selbstverständlich können auch auf mobilen Endgeräten Webseiten im HTML-Format und darin einzubettende Werbeinhalte mit einem mobilen Internetbrowser zur Anzeige gebracht werden. Das erfindungsgemäße Verfahren eignet sich daher auch zum Unterbinden einer Auslieferung von Werbeinhalten und/oder Werbemitteln sowohl in den sogenannten Apps als auch in den mobilen Internetbrowsern.

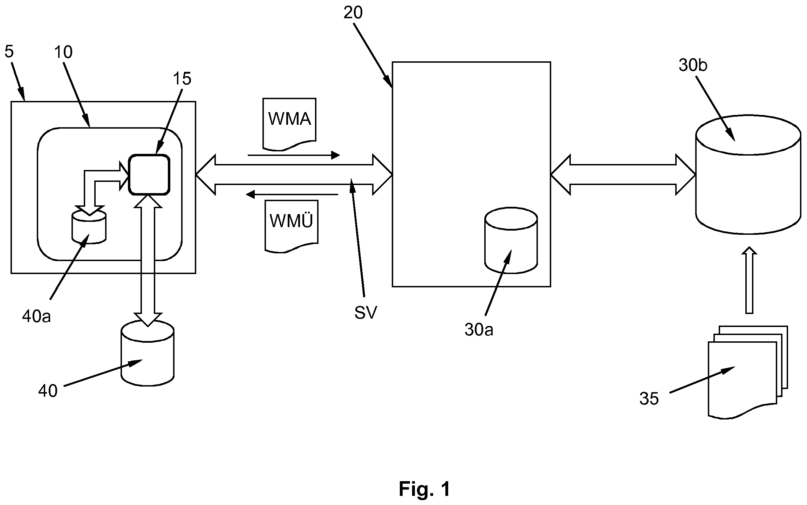

**Fig. 1** zeigt ein System zur Auslieferung von Werbeinhalten, mit dem das erfindungsgemäße Verfahren zum Unterbinden einer Auslieferung von Werbeinhalten verdeutlicht wird.

In einer Clientsoftware 10, die auf einer Clienteinrichtung 5 zur Ausführung gebracht wird und die hier als Internetbrowser bzw. Webbrowser ausgestaltet ist, werden elektronische Dokumente, beispielsweise HTML-Dokumente zur Anzeige gebracht. Das angezeigte bzw. das anzuzeigende HTML-Dokument wird von einem sogenannten Webserver (in Fig. 1 nicht gezeigt) angefragt und an die Clienteinrichtung 5 übertragen. In dem HTML-Dokument können sogenannte Clientscripts (beispielsweise als JavaScript-Funktionen) eingebettet sein, die beim Laden des HTML-Dokuments oder nach dem Laden des HTML-Dokuments zur Ausführung gebracht werden. Die Clientscripts stellen eine Socketverbindung SV von der Clienteinrichtung 5 zu einem Socketserver 20 her. Der Socketserver 20 kann beispielsweise eine Servereinrichtung sein, die angepasst ist, Socketverbindungen zu Clienteinrichtungen aufzubauen.

Das Clientscript sendet über die Socketverbindung SV eine Werbemittelanfragenachricht WMA an den Socketserver 20, wobei hierfür ein Websocket-Protokoll, beispielsweise das Websocket-Protokoll oder das Secure-Websocket-Protokoll nach dem Standard RFC6455 verwendet wird. Wenn nachfolgend von dem Web-socket-Protokoll die Rede ist, ist immer Websocket-Protokoll und/oder Secure-Websocket-Protokoll gemeint.

Für die Adressierung des Socketservers 20 benötigt das Clientscript eine sogenannte Uniform Ressource Identifier (URI). Mit der URI wird der Socketserver 20 eindeutig adressiert.

Die Werbemittelanfragenachricht WMA umfasst eine oder mehrere Kennungen, die die einzubindenden bzw. einzubettenden Werbemittel bzw. Werbeinhalte eindeutig identifizieren.

Nachdem die Werbemittelanfragenachricht WMA von der Clientsoftware 10 an den Socketserver 20 übertragen worden ist, wird die Werbemittelanfragenachricht WMA von dem Socketserver 20 ausgewertet. In der hier gezeigten Ausgestaltung des Systems fragt der Socketserver 20 von einem Werbemittelserver 30a bzw. von einer Werbemitteldatenbank 30b die in der Werbemittelanfragenachricht WMA angefragten Werbemittel bzw. Werbeinhalte ab.

Die abgefragten Werbemittel bzw. Werbeinhalte werden mit einer Werbemittelübertragungsnachricht WMÜ von dem Socketserver 20 an die Clientsoftware 10 bzw. an den Internetbrowser 10 übertragen. Der Internetbrowser 10 nimmt die Werbemittelübertragungsnachricht WMÜ entgegen und fügt die in der Werbemittelübertragungsnachricht WMÜ enthaltenen Werbeinhalte in das in dem Internetbrowser 10 angezeigte HTML-Dokument ein.

In der Werbemitteldatenbank 30b können eine Anzahl von Werbemittel bzw. Werbeinhalte 35 gespeichert werden.

In einer alternativen Ausgestaltung des Systems kann die Clientsoftware 10 bzw. das Clientscript eine auf dem Websocket-Protokoll basierende Socketverbindung auch direkt zum Werbemittelserver 30a aufbauen, wobei der Werbemittelserver 30a die Werbemittelanfragenachricht WMA entgegennimmt und die entsprechende Werbemittelübertragungsnachricht erzeugt und an die Clientsoftware 10 überträgt.

Die Clientsoftware 10 umfasst einen erfindungsgemäßen Werbeblocker 15, der als Plug-In zur Clientsoftware 10, etwa als Plug-In für einen Internetbrowser realisiert sein kann. Alternativ kann der Werbeblocker 15 auch als Toolbar, beispielsweise als Toolbar für einen Internetbrowser realisiert sein. In einer alternativen Ausgestaltung kann der Werbeblocker 15 auch vom Betriebssystem des Endgerätes, auf dem die Clientsoftware läuft, bereitgestellt werden bzw. als Betriebssystemfunktion implementiert sein.

Unabhängig davon, ob der Werbeblocker 15 als Plug-In, als Toolbar oder als Betriebssystemfunktion realisiert ist, ist der Werbeblocker 15 angepasst, Verbindungsaufbauversuche der Clienteinrichtung zu einer Servereinrichtung, die das Websocket-Protokoll verwenden, zu überwachen. Der Werbeblocker kann hierzu einen Listener auf Verbindungsaufbauversuche, die das Websocket-Protokoll verwenden, registrieren. Sobald ein Verbindungsaufbauversuch über das Websocket-Protokoll durchgeführt wird, wird ein entsprechendes Event ausgelöst, das von einem dem Event zugeordneten Programm bzw. Subroutine verarbeitet wird. Das Event umfasst die für den Verbindungsaufbauversuch verwendete Uniform Ressource Identifier URI als Parameter, der an die das Event verarbeitende Subroutine übergeben wird.

Mit Hilfe von hinterlegten Regeln bzw. Filterregeln, die als globale Filterregeln 40 in einer weiteren Servereinrichtung bzw. Datenbank oder als lokale Regeln 40a in der Clienteinrichtung gespeichert sein können, prüft die Subroutine bzw. der Werbeblocker 15, ob dieser Uniform Ressource Identifier für einen Verbindungsaufbau verwendet werden darf. Ergibt diese Prüfung, dass dieser Uniform Ressource Identifier für einen Verbindungsaufbau nicht verwendet werden darf, wird der Verbindungsaufbauversuch von dem Werbeblocker 15 geblockt bzw. beendet. Das Blocken des Verbindungsaufbauversuches wird dabei von dem Werbeblocker über eine Programmierschnittstelle (API), beispielsweise des Internetbrowsers, vorgenommen.

Durch das Blockieren des Verbindungsaufbauversuches bzw. des Verbindungsaufbaus von der Clientsoftware 10 zu dem Socketserver 20 bzw. zu dem Werbemittelserver 30a wird verhindert, dass von dem Socketserver 20 bzw. von dem Werbemittelserver 30a Werbeinhalte an die Clientsoftware 10 übertragen und dort zur Anzeige gebracht werden. Damit wird einerseits erreicht, dass beispielsweise ein abgerufenes HTML-Dokument weitgehend frei von Werbeeinblendungen ist. Andererseits wird erreicht, dass die an die Clienteinrichtung zu übertragende Datenmenge möglichst gering gehalten wird, was insbesondere bei mobilen Endgeräten von Vorteil ist.

Wichtig ist, dass erfindungsgemäß nur solche Verbindungsaufbauversuche zu einem Socketserver bzw. zu einem Werbemittelserver überprüft und gegebenenfalls unterbunden werden, die das Websocket-Protokoll verwenden.

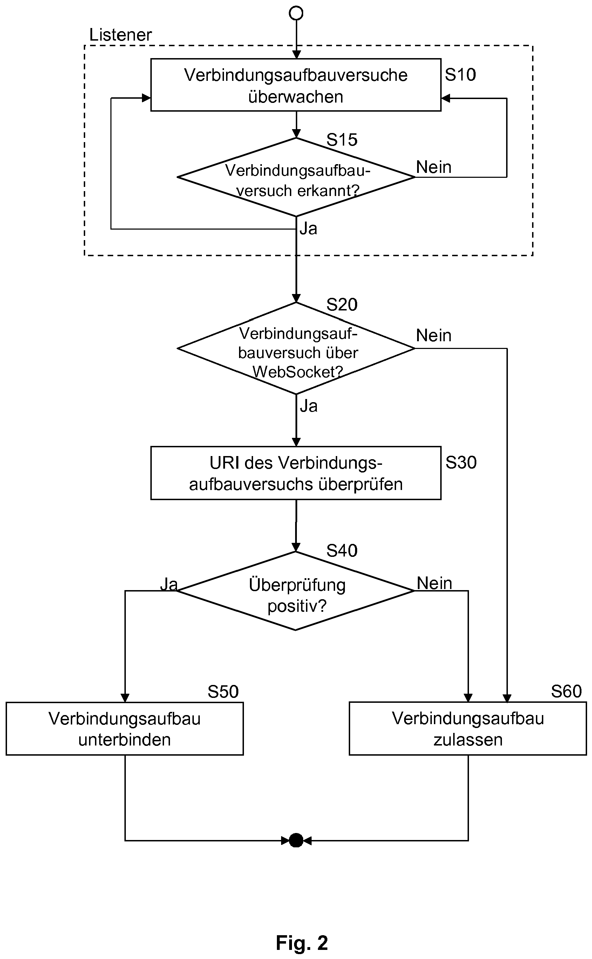

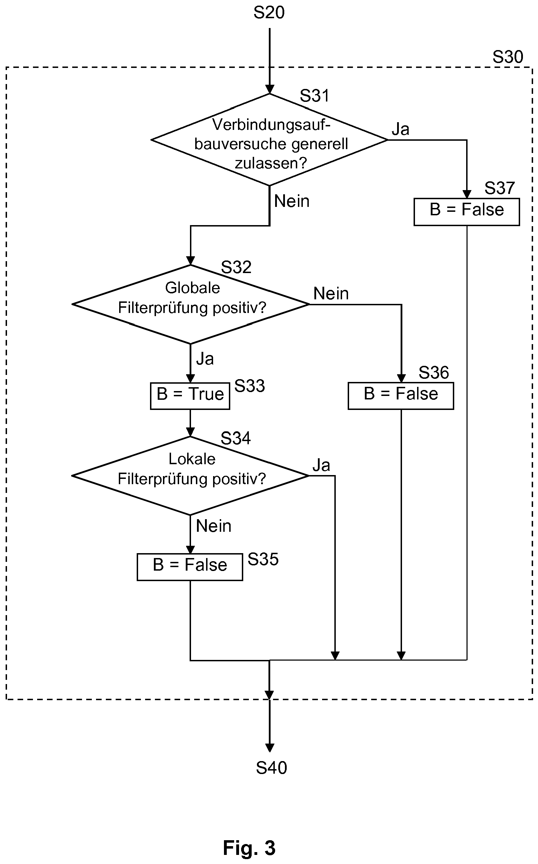

Das Verfahren zum Unterbinden einer Auslieferung von Werbeinhalten wird nachfolgend mit Bezug auf Fig. 2 und Fig. 3 detailliert beschrieben.

**Fig. 2** zeigt ein Ablaufdiagramm eines erfindungsgemäßen Verfahrens zum Unterbinden einer Auslieferung von Werbeinhalten und/oder Werbemitteln von einer Servereinrichtung an eine Clienteinrichtung.

In einem ersten Schritt S10 werden Verbindungsaufbauversuche der Clienteinrichtung zu einer Servereinrichtung überwacht. Wird ein Verbindungsaufbauversuch erkannt, was in dem Schritt S15 geprüft wird, wird das Verfahren einerseits mit dem Schritt S20 fortgesetzt und andererseits wird das Verfahren mit dem Schritt S10 fortgesetzt, mit dem weiterhin überwacht wird, ob weitere Verbindungsaufbauversuche stattfinden.

Die Schritte S10 und S 15 werden hier von einem Listener durchgeführt, der zur Überwachung von Verbindungsaufbau-Ereignissen in der Clientsoftware, beispielsweise in einem Internetbrowser registriert worden ist. Die Registrierung des Listeners bei dem Internetbrowser kann beispielsweise über eine von dem Internetbrowser zur Verfügung gestellte Programmierschnittstelle (API) erfolgen. Diese Programmierschnittstelle kann beispielsweise eine Programmierschnittstelle für Plug-Ins umfassen.

In einer alternativen Ausgestaltung kann der Listener auch bei dem Betriebssystem der Clienteinrichtung registriert werden, sodass nicht nur Verbindungsaufbauversuche eines Internetbrowsers überwacht werden können, sondern auch Verbindungsaufbauversuche, die von anderen Anwendungsprogrammen durchgeführt werden.

Sobald der Internetbrowser eine Anfrage an eine Servereinrichtung bzw. an einen Werbemittelserver stellt, wird ein entsprechendes Event ausgelöst, was in dem Schritt S15 erkannt wird. Dieses Event liefert als Parameter einen Uniform Ressource Identifier URI, der die Adresse der Servereinrichtung bzw. des Werbemittelservers speichert.

Nachdem ein Verbindungsaufbauversuch erkannt wurde und ein entsprechendes Event ausgelöst wurde, wird in dem Schritt S20 geprüft, ob für den Verbindungsaufbauversuch das Websocket-Protokoll verwendet wird. Hierzu können verschiedene Parameter des Verbindungsaufbaus bzw. des für den Verbindungsaufbau verwendeten Protokolls ausgewertet werden. Alternativ können auch verschiedene Parameter bzw. Bestandteile der URI des Verbindungsaufbauversuches ausgewertet werden. Beispielsweise kann in der URI die die Zugriffsmethode festlegende Schema-Bezeichnung ausgewertet werden.

Wird in dem Schritt S20 festgestellt, dass der Verbindungsaufbauversuch nicht über das Websocket-Protokoll durchgeführt wird, verzweigt das Verfahren zu dem Schritt S60 und veranlasst den Werbeblocker den Verbindungsaufbau zuzulassen.

Wird in dem Schritt S20 allerdings festgestellt, dass der Verbindungsaufbauversuch über das Websocket-Protokoll stattfindet, wird in dem nachfolgenden Schritt S30 geprüft, ob die in dem Verbindungsaufbauversuch verwendete URI für einen Verbindungsaufbau verwendet werden kann. Die in dem Schritt S30 durchgeführten Unterschritte werden mit Bezug auf Fig. 3 näher erläutert.

In dem Schritt S30 nachfolgenden Schritt S40 wird überprüft, ob das Ergebnis der in dem Schritt S30 durchgeführten Überprüfung positiv ist. Ist die Überprüfung positiv, veranlasst der Werbeblocker in dem nachfolgenden Schritt S50, dass der Verbindungsaufbau unterbunden wird bzw. abgebrochen wird. Eine Überprüfung kann beispielsweise dann positiv sein, wenn die in der URI des Verbindungsaufbauversuches angegebene Adresse der Servereinrichtung bzw. des Werbemittelservers für einen Verbindungsaufbau nicht verwendet werden darf.

Ist die Überprüfung hingegen negativ, wird der Verbindungsaufbau in dem Schritt S60 zu der in der URI angegebenen Adresse zugelassen.

Bei dem erfindungsgemäßen Verfahren wird demnach zunächst geprüft, ob die Clientsoftware bei dem Versuch eine Verbindung zu einer Servereinrichtung aufzubauen das Websocket-Protokoll verwendet. Wird das Websocket-Protokoll verwendet, wird anschließend erfindungsgemäß geprüft, ob die in der URI des Verbindungsaufbauversuches verwendete Adresse für den Aufbau der Verbindung zugelassen ist und falls die Adresse für den Verbindungsaufbau nicht zugelassen ist, wird der Verbindungsaufbauversuch abgebrochen, sodass eine Kommunikation von der Clientsoftware zu der Servereinrichtung bzw. zu dem Werbemittelserver nicht zustande kommt. Damit wird verhindert, dass Werbeinhalte bzw. Werbemittel von einer Servereinrichtung bzw. von einem Werbemittelserver an die Clienteinrichtung bzw. an die Clientsoftware ausgeliefert werden, um dort zur Anzeige gebracht zu werden. Das Volumen der zu übertragenden Daten an die Clienteinrichtung bzw. an die Clientsoftware kann so erheblich reduziert werden.

Durch die Überprüfung der URI in dem Schritt S30 können zudem bestimmte Adressen für einen Verbindungsaufbau zugelassen werden, selbst wenn der Verbindungsaufbau zu einer solchen Adresse über das Websocket-Protokoll abgewickelt wird. Beispielsweise können solche Adressen für einen Verbindungsaufbau über das Websocket-Protokoll zugelassen werden, die als besonders vertrauenswürdig eingestuft werden. Alternativ können auch solche Adressen für den Verbindungsaufbau über das Websocket-Protokoll zugelassen werden, deren Betreiber bestimmte Eigenschaften bzw. Voraussetzungen erfüllen. Solche Eigenschaften bzw. Voraussetzungen können beispielsweise sein, dass die Betreiber bzw. Inhaber dieser Adressen an den Herausgeber des Werbeblockers eine einmalige oder eine regelmäßig wiederkehrende Gebühr entrichten.

Alternativ können Verbindungsaufbauversuche über das Websocket-Protokoll auch dann unterbunden werden, wenn der Benutzer des Werbeblockers eine einmalige oder eine regelmäßig wiederkehrende Gebühr an den Herausgeber des Werbeblockers entrichtet.

In einer Ausgestaltung der Erfindung können die Schritte S 10, S 15 und S20 des in Fig. 2 gezeigten Verfahrens optional oder gar nicht ausgeführt werden. Damit ist es möglich, die Auslieferung von Werbeinhalten auch dann zu unterbinden, wenn bereits eine bestehende Websocket-Verbindung zu einer Servereinrichtung vorhanden bzw. eingerichtet ist.

Fig. 3 zeigt ein mögliches Ablaufdiagramm der in dem Schritt S30 ausgeführten Verfahrensschritte.

In einem Schritt S31 wird zunächst geprüft, ob Verbindungsaufbauversuche generell zugelassen sind. Wenn Verbindungsaufbauversuche generell zugelassen sind, wird in dem Schritt S37 eine Variable B (blockieren) auf False gesetzt. In dem anderen Fall, also wenn Verbindungsaufbauversuche nicht generell zugelassen sind, wird das Verfahren bzw. der Schritt S30 mit dem Schritt S32 fortgesetzt.

Verbindungsaufbauversuche können beispielsweise dann generell nicht zugelassen sein, wenn der Nutzer des Werbeblockers beispielsweise an den Herausgeber des Werbeblockers eine einmalige oder wiederkehrende Gebühr entrichtet. Sind Verbindungsaufbauversuche generell nicht zugelassen, kann das Verfahren nach dem Schritt S31 mit dem Schritt S40 fortgesetzt werden, in dem dann festgestellt wird, dass die Überprüfung in dem Schritt S30 positiv ist, sodass der Verbindungsaufbau in dem Schritt S50 unterbunden wird.

In dem in Fig. 3 gezeigten Ablauf wird für den Fall, dass Verbindungsaufbauversuche generell nicht zugelassen sind, mit dem Schritt S32 fortgesetzt. In dem Schritt S32 wird dann geprüft, ob eine globale Filterprüfung positiv ist. Bei der globalen Filterprüfung kann überprüft werden, ob die in der URI des Verbindungsaufbauversuches angegebene Adresse bestimmte globale Filterkriterien bzw. Filterregeln erfüllt, die beispielsweise in einer weiteren Servereinrichtung gespeichert sind. Als globale Filterregeln können beispielsweise bestimmte Adressen hinterlegt sein. Stimmt die Adresse der URI des Verbindungsaufbauversuches mit einer hinterlegten Adresse überein, kann die globale Filterprüfung als positiv betrachtet werden, d.h., dass diese Adresse für einen Verbindungsaufbau nicht verwendet werden darf.

Der Vergleich mit den in den globalen Filterregeln hinterlegten Adressen kann auf Basis des Klartextes der Adresse oder auf Basis der IP-Adresse durchgeführt werden. Ferner können für den Vergleich auch bestimmte reguläre Ausdrücke herangezogen werden. Dies gilt auch für die nachfolgend beschriebenen lokalen Filterregeln.

Die globalen Filterregeln können beispielsweise von dem Herausgeber des Werbeblockers bereitgestellt und/oder gepflegt werden. Als globale Filterregeln können beispielsweise Adressen von Servereinrichtungen bzw. Werbemittelservern hinterlegt werden, die vorgesehen sind, Werbeinhalte für eine Auslieferung an beispielsweise eine Webseite bereitzustellen. Mit den globalen Filterregeln wird die Möglichkeit bereitgestellt, dass eine Anzahl oder alle bekannten Werbemittelserver an einer zentralen Stelle gesammelt werden können, sodass der Werbeblocker lediglich auf diese globalen Filterregeln zugreifen muss, um in dem Schritt S32 zu prüfen, ob eine Filterprüfung positiv ist. Der Vorteil liegt insbesondere darin, dass die globalen Filterregeln für sämtliche erfindungsgemäßen Werbeblocker identisch sein können.

In einer Ausgestaltung der Erfindung können allerdings bestimmte Adressen von Werbemittelservern aus den globalen Filterregeln entfernt werden, wenn beispielsweise die Betreiber dieser Adressen dem Anbieter des Werbeblockers eine einmalige oder regelmäßig wiederkehrende Gebühr entrichtet.

Eine globale Filterprüfung kann auch die Möglichkeit umfassen, dass für bestimmte Benutzer eines erfindungsgemäßen Werbeblockers die globale Filterprüfung positiv ist, selbst wenn die in der URI enthaltene Adresse in den globalen Filterregeln hinterlegt ist, beispielsweise wenn der Benutzer eine für die Blockierung von Werbeinhalten zu entrichtende Gebühr nicht entrichtet hat. In diesem Fall würde der Verbindungsaufbauversuch nicht unterbrochen werden, selbst wenn die verwendete Adresse in den globalen Filterregeln enthalten ist.

Führt die in dem Schritt S32 durchgeführte globale Filterprüfung zu einem positiven Ergebnis, wird in dem nächsten Schritt S33 die Variable B auf True gesetzt. Andernfalls wird die Variable B in dem Schritt S36 auf False gesetzt.

Nach dem Schritt S36 wird in dem hier gezeigten Beispiel das Verfahren mit dem Schritt S40 fortgesetzt.

Nach dem Schritt S33, in dem die Variable B auf True gesetzt wird, wird mit dem Schritt S34 fortgefahren, in dem eine lokale Filterprüfung durchgeführt wird. Bei dem hier gezeigten Beispiel wird mit der lokalen Filterprüfung S34 geprüft, ob die in dem Verbindungsaufbauversuch verwendete Adresse lokalen Filterregeln, die in der Clienteinrichtung gespeichert sind, entspricht. Die lokalen Filterregeln können beispielsweise Adressen von Werbemittelservern umfassen, zu denen kein Verbindungsaufbau durchgeführt werden kann bzw. darf. Die lokalen Filterregeln können aber auch Adressen von Werbemittelservern umfassen, zu denen ein Verbindungsaufbau durchgeführt werden kann, beispielsweise weil die Adressen als besonders vertrauenswürdig einzustufen sind oder weil die Werbeinhalte, die von dieser Adresse abrufbar sind, als besonders wenig aufdringlich gelten.

Kommt die lokale Filterprüfung in dem Schritt S34 zu keinem positiven Ergebnis, wird in dem Schritt S35 die Variable B auf False gesetzt, d.h. für die in der URI angegebene Adresse wird der Verbindungsaufbauversuch zugelassen. Anderenfalls, also wenn die lokale Filterprüfung positiv war, behält die Variable B den im Schritt S33 gesetzten Wert, also im vorliegenden Beispiel den Wert True. In beiden Fällen wird das Verfahren mit dem Schritt S40 fortgeführt.

Die lokale Filterprüfung in dem Schritt S34 wird in dem vorliegenden Fall nach der globalen Filterprüfung in dem Schritt S32 ausgeführt. Dies hat den Vorteil, dass der lokalen Filterprüfung ein höheres Gewicht eingeräumt werden kann, als der globalen Filterprüfung. Beispielsweise kann die globale Filterprüfung ergeben, dass zu einer bestimmten Adresse ein Verbindungsaufbauversuch zugelassen ist, während aufgrund der lokalen Filterprüfung ein Verbindungsaufbauversuch zu genau dieser Adresse nicht zugelassen ist, oder umgekehrt. So können beispielsweise bestimmte Adressen aufgrund der lokalen Filterprüfung für einen Verbindungsaufbau blockiert sein, während einige dieser blockierten Adressen aufgrund der globalen Filterprüfung für einen Verbindungsaufbau zugelassen sind. Diese Überprüfungsreihenfolge ist beispielsweise dann vorteilhaft, wenn Benutzer eines erfindungsgemäßen Werbeblockers die Möglichkeit haben, beispielsweise durch Entrichten von Gebühren an den Betreiber des Werbeblockers bestimmte Adressen für den Bezug von Werbeinhalten zu blockieren. Diese Adressen können dann bei den Benutzern des Werbeblockers, die die entsprechende Gebühr entrichtet haben, als lokale Filterregeln gespeichert werden.

Alternativ zu den zu entrichtenden Gebühren kann auch vorgesehen sein, dass bestimmte Adressen von Werbemittelservern dann blockiert werden, wenn der Benutzer eines Werbeblockers sich als Follower eines bestimmten Profils eines sozialen Netzwerkes registriert.

In einer Ausgestaltung der Erfindung kann in dem Werbeblocker vorgesehen sein, dass dort eine eindeutige Kennung eines Benutzers hinterlegt wird. Bei der Prüfung, ob eine Adresse beispielsweise ein globales Filterkriterium erfüllt, kann diese eindeutige Kennung des Benutzers an die Servereinrichtung übertragen werden, die die Überprüfung der Adresse durchführt. Zur Überprüfung der Adresse kann dann die eindeutige Benutzerkennung mit berücksichtigt werden, um beispielsweise zu ermitteln, ob der Benutzer die erforderlichen Gebühren entrichtet hat oder ob für den Benutzer aufgrund anderer Kriterien die Adresse für einen Verbindungsaufbau zu einem Werbemittelserver unzulässig oder zulässig ist.

Der in dem Schritt S30 gesetzte Wert der Variable B kann in dem Schritt S40 ausgewertet werden. Hat die Variable B den Wert True, kommt die Überprüfung in dem Schritt S40 zu einem positiven Ergebnis, sodass der Verbindungsaufbau in dem Schritt S50 unterbunden wird. Andernfalls, also wenn der Wert der Variable B False ist, kommt die Überprüfung in dem Schritt S40 zu keinem positiven Ergebnis, sodass der Verbindungsaufbau zu der entsprechenden Adresse zugelassen wird, was dazu führt, dass von dieser Adresse die Werbeinhalte an die Clienteinrichtung übertragen werden.

Mit der vorliegenden Erfindung ist es möglich, Werbeinhalte, die basierend auf dem Websocket-Protokoll von einem Werbemittelserver abgerufen werden sollen, blockiert werden können, sodass eine Kommunikation zu dem Werbemittelserver nicht zustande kommt und damit auch keine Werbeinhalte an die Clienteinrichtung übertragen werden. Dennoch ist es möglich, sofern bestimmte Voraussetzungen erfüllt sind, dass Werbeinhalte bestimmter Werbemittelserver oder für bestimmte Nutzer des Werbeblockers dennoch an die Clienteinrichtung übertragen werden und dort zur Anzeige gebracht werden. Für welche Benutzer welche Werbemittelserver blockiert bzw. nicht blockiert werden, kann mit Hilfe der globalen und lokalen Filterregeln besonders variabel festgelegt werden.

Der Werbeblocker kann erfindungsgemäß als Plug-In oder als Toolbar eines Internetbrowsers zur Verfügung gestellt werden. In einer alternativen Ausgestaltung kann der Werbeblocker auch als Betriebssystemfunktion eines Betriebssystems bereitgestellt werden, beispielsweise als Service, der im Hintergrund ausgeführt wird.

Vorstehend ist das erfindungsgemäße Verfahren beschrieben worden, bei dem überprüft wird, ob das Websocket-Protokoll verwendet wird. Anstelle der Prüfung, ob das Websocket-Protokoll verwendet wird kann auch geprüft werden, ob das HTTPS-Protokoll verwendet wird.

Der Werbeblocker kann von dem Anbieter des Werbeblockers zum Download bereitgestellt werden, sodass es in der Hand des Nutzers liegt, ob er diesen Werbeblocker als Plug-In oder als Toolbar bzw. als im Hintergrund laufenden Service herunterladen und installieren will.

### Bezugszeichen:

- 5: Clienteinrichtung
- 10: Clientsoftware (z.B. Browser zur Darstellung von Webseiten)
- 15: Werbeblocker, z.B. als Plug-In
- 20: Socket-Server (Servereinrichtung, die angepasst ist mit der Client-software eine Socket-Verbindung aufzubauen)
- 30a: Werbemittelserver (z.B. Servereinrichtung mit einer Datenbank und/oder Datenbankserver des Socket-Servers)
- 30b: Werbemitteldatenbank
- 35: Werbemittel und/oder Werbeinhalte
- 40: globale Filterregeln (z.B. von einer Servereinrichtung mit Datenbank bereitgestellt, z.B. als Webservice)
- 40a: lokale Filterregeln
- S10 bis S60: Schritte des Verfahrens
- SV: Socket-Verbindung zwischen der Clienteinrichtung und dem Socket-Server
- WMA: Werbemittelanfragenachricht
- WMÜ: Werbemittelübertragungsnachricht

## Patentansprüche

1. Verfahren zum Unterbinden einer Auslieferung von Werbeinhalten und/oder Werbemitteln (35) von einer Servereinrichtung an eine Clienteinrichtung (5), wobei ein Werbeblocker (15) der Clienteinrichtung
(a) Verbindungsaufbauversuche der Clienteinrichtung (5) zu der Servereinrichtung überwacht (S 10),
(b) bei einem erkannten Verbindungsaufbauversuch (S 15) ermittelt, ob für den Verbindungsaufbauversuch das Web-Socket-Protokoll verwendet wird,
(c) falls für den Verbindungsaufbauversuch das Web-Socket-Protokoll verwendet wird, für den Uniform Resource Identifier, URI, des Verbindungsaufbauversuches überprüft, ob dieser für den Verbindungsaufbau verwendet werden darf (S30),
(d) falls die Prüfung (S30) ergibt, dass der URI für den Verbindungsaufbau nicht verwendet werden darf (S40), den Verbindungsaufbauversuch beendet (S50), und anderenfalls den Verbindungsaufbauversuch zur Servereinrichtung zulässt (S60), und
(e) falls für den Verbindungsaufbauversuch nicht das Web-Socket-Protokoll verwendet wird, den Verbindungsaufbauversuch zur Servereinrichtung zulässt (S60).

2. Verfahren nach Anspruch 1, wobei das Überwachen der Verbindungsaufbauversuche (S10) von einem Event-Listener durchgeführt wird, der an der Clienteinrichtung für Verbindungsaufbau-Ereignisse registriert worden ist.

3. Verfahren nach einem der vorhergehenden Ansprüche, wobei der Werbeblocker (15) in einem Schritt (S31) überprüft, ob Verbindungsaufbauversuche generell zugelassen werden, und falls diese Überprüfung positiv ist, den Verbindungsaufbauversuch zur Servereinrichtung zulässt.

4. Verfahren nach dem vorhergehenden Anspruch, wobei bei der Überprüfung, ob Verbindungsaufbauversuche generell zugelassen werden, eine in der Clienteinrichtung (5) gespeicherte eindeutige Kennung an einen Drittserver übertragen wird und als Antwort auf die übertragene eindeutige Kennung von dem Drittserver eine Rückgabenachricht empfangen wird, die eine Information darüber umfasst, ob die Überprüfung positiv ist, wobei die eindeutige Kennung eine Benutzerkennung umfasst.

5. Verfahren nach einem der vorhergehenden Ansprüche, wobei bei der Überprüfung (S30), ob der URI des Verbindungsaufbauversuches für den Verbindungsaufbau verwendet werden darf, eine globale Filterprüfung (S32) durchgeführt wird, bei der ermittelt wird, ob der URI eine oder mehrere globale Filterregeln (40) erfüllt, und, falls das Ergebnis der globalen Filterprüfung positiv ist, den Verbindungsaufbauversuch beendet.

6. Verfahren nach dem vorhergehenden Anspruch, wobei bei der globalen Filterprüfung (S32) der URI an eine Servereinrichtung übertragen wird, in der die globalen Filterregeln (40) gespeichert sind, und von der Servereinrichtung eine Nachricht empfangen wird, die Information darüber umfasst, ob der URI eine oder mehrere globale Filterregeln (40) erfüllt.

7. Verfahren nach einem der vorhergehenden Ansprüche, wobei bei der Überprüfung (S30), ob der URI des Verbindungsaufbauversuches für den Verbindungsaufbau verwendet werden darf, eine lokale Filterprüfung (S34) durchgeführt wird, bei der ermittelt wird, ob der URI eine oder mehrere lokale Filterregeln (40a) erfüllt, und, falls das Ergebnis der lokalen Filterprüfung positiv ist, den Verbindungsaufbauversuch beendet, wobei die lokalen Filterregeln (40a) in der Clienteinrichtung (5) gespeichert sind.

8. Verfahren nach Anspruch 7, wobei die globale Filterprüfung (S32) vor der lokalen Filterprüfung (S34) durchgeführt wird.

9. Verfahren nach einem der vorhergehenden Ansprüche, wobei die Servereinrichtung einen Werbemittelserver (30a), eine Werbemitteldatenbank (30b) und/oder einen Socket-Server (20) umfasst, die angepasst sind, eine Socket-Verbindung zu der Clienteinrichtung (5) aufzubauen.

10. Verfahren nach einem der vorhergehenden Ansprüche, wobei der Werbeblocker (15) ein Plug-In, insbesondere ein Plug-In eines Internetbrowsers und/oder eine Toolbar, insbesondere eine Toolbar eines Internetbrowsers umfasst.

11. Clienteinrichtung (5) zum Anzeigen von elektronischen Dokumenten, insbesondere HTML-Dokumente, wobei die Clienteinrichtung einen Werbeblocker (15) umfasst, der so eingerichtet ist, dass er
(a) Verbindungsaufbauversuche der Clienteinrichtung (5) zu einer Servereinrichtung überwacht (S 10),
(b) bei einem erkannten Verbindungsaufbauversuch (S 15) ermittelt, ob für den Verbindungsaufbauversuch das Web-Socket-Protokoll verwendet wird,
(c) falls für den Verbindungsaufbauversuch das Web-Socket-Protokoll verwendet wird, für den Uniform Resource Identifier, URI, des Verbindungsaufbauversuches überprüft, ob dieser für den Verbindungsaufbau verwendet werden darf (S30),
(d) falls die Prüfung (S30) ergibt, dass der URI für den Verbindungsaufbau nicht verwendet werden darf (S40), den Verbindungsaufbauversuch beendet (S50), und anderenfalls den Verbindungsaufbauversuch zur Servereinrichtung zulässt (S60), und
(e) falls für den Verbindungsaufbauversuch nicht das Web-Socket-Protokoll verwendet wird, den Verbindungsaufbauversuch zur Servereinrichtung zulässt (S60).

12. Clienteinrichtung nach Anspruch 11, wobei der Werbeblocker (15) weiter so eingerichtet ist, das Verfahren nach einem der Ansprüche 2 bis 10 zur Ausführung zu bringen.

13. Datenträgereinrichtung mit darauf gespeicherten Daten oder für die Übertragung über das Internet geeignete, Daten repräsentierende Signalfolge, wobei die Daten ein Werbeblockerprogramm (15) zum Ablauf auf einer Clienteinrichtung (5) zur Anzeige von elektronischen Dokumenten darstellen, wobei das Werbeblockerprogramm so ausgebildet ist, dass es ein Verfahren nach einem der Ansprüche 1 bis 10 zur Ausführung bringt.

## Claims

1. A method for preventing a delivery of advertising content and/or advertising media (35) from a server device to a client device (5), wherein an advertising blocker (15) of the client device
(a) monitors connection establishment attempts of the client device (5) to the server device (S10),
(b) in case of a detected connection establishment attempt (S15), determines whether the WebSocket protocol is used for said connection establishment attempt,
(c) if the WebSocket protocol is used for said connection establishment attempt, verifies for the Uniform Resource Identifier, URI, of said connection establishment attempt whether it is allowed to be used for said connection establishment (S30),
(d) if the verification (S30) reveals that the URI is not allowed to be used for said connection establishment (S40), aborts said connection establishment attempt (S50), and otherwise allows said connection establishment attempt to the server device (S60), and
(e) if the WebSocket protocol is not used for said connection establishment attempt, allows said connection establishment attempt to the server device (S60).

2. The method as claimed in claim 1, wherein the monitoring of said connection establishment attempts (S10) is performed by an event listener which has been registered with the client device for dealing with connection establishment events.

3. The method as claimed in any of the preceding claims, wherein the advertising blocker (15) in a step (S31) verifies whether the connection establishment attempts are generally allowed and, if this verification is positive, allows the connection establishment attempt to the server device.

4. The method as claimed in the preceding claim, wherein in the course of the verification whether connection establishment attempts are generally allowed, a unique identifier stored in the client device (5) is transmitted to a third-party server and in response to said transmitted unique identifier a return message is received from said third-party server which comprises information on whether the verification is positive, said unique identifier comprising a user identifier.

5. The method as claimed in any of the preceding claims, wherein in the course of the verification (S30) whether the URI of the connection establishment attempt is allowed to be used for said connection establishment, a global filter check (S32) is performed in the course of which it is determined whether the URI matches one or several global filter rules (40) and, if the result of the global filter check is positive, said connection establishment attempt is aborted.

6. The method as claimed in the preceding claim, wherein in the course of the global filter check (S32), the URI is transmitted to a server device in which the global filter rules (40) are stored, and a message is received from said server device which comprises information on whether the URI matches one or several global filter rules (40).

7. The method as claimed in any of the preceding claims, wherein in the course of the verification (S30) whether the URI of the connection establishment attempt is allowed to be used for said connection establishment, a local filter check (S34) is performed in the course of which it is determined whether the URI matches one or several local filter rules (40a) and, if the result of the local filter check is positive, said connection establishment attempt is aborted, said local filter rules (40a) being stored in the client device (5).

8. The method as claimed in claim 7, wherein said global filter check (S32) is performed prior to said local filter check (S34).

9. The method as claimed in any of the preceding claims, wherein the server device comprises an advertising media server (30a), an advertising media data base (30b), and/or a socket server (20) which are adapted to establish a socket connection to the client device (5).

10. The method as claimed in any of the preceding claims, wherein the advertising blocker (15) comprises a plug-in, in particular a plug-in of an Internet browser, and/or a tool bar, in particular a tool bar of an Internet browser.

11. A client device (5) for displaying electronic documents, in particular HTML documents, wherein the client device comprises an advertising blocker (15) which is designed in such a way that it
(a) monitors connection establishment attempts of the client device (5) to a server device (S10),
(b) in case of a detected connection establishment attempt (S15), determines whether the WebSocket protocol is used for said connection establishment attempt,
(c) if the WebSocket protocol is used for said connection establishment attempt, verifies for the Uniform Resource Identifier, URI, of said connection establishment attempt whether it is allowed to be used for said connection establishment (S30),
(d) if the verification (S30) reveals that the URI is not allowed to be used for said connection establishment (S40), aborts said connection establishment attempt (S50), and otherwise allows said connection establishment attempt to the server device (S60), and
(e) if the WebSocket protocol is not used for said connection establishment attempt, allows said connection establishment attempt to the server device (S60).

12. The client device as claimed in claim 11, wherein the advertising blocker (15) is further configured to carry out the method as claimed in any one of claims 2 to 10.

13. A data carrier device having stored thereon data or a sequence of signals representing data suitable for being transmitted via the Internet, wherein said data constitutes an advertising blocker program (15) designed to be run on a client device (5) for the display of electronic documents, said advertising blocker program being designed to carry out a method as claimed in any one of claims 1 to 10.

## Revendications

1. Procédé destiné à supprimer un envoi de contenus publicitaires et/ou de moyens publicitaires (35) effectué depuis un dispositif serveur vers un dispositif client (5), lors duquel un bloqueur de publicité (15) du dispositif client
(a) surveille des tentatives d'établissement de connexion effectuées depuis le dispositif client (5) vers le dispositif serveur (S10),
(b) lorsqu'une tentative d'établissement de connexion est détectée (S15), détermine si le protocole WebSocket est utilisé pour ladite tentative d'établissement de connexion,
(c) dans le cas où le protocole WebSocket est utilisé pour ladite tentative d'établissement de connexion, contrôle pour l'identifiant uniforme de ressource, URI, de la tentative d'établissement de connexion si celui-ci peut être utilisé pour l'établissement de connexion (S30),
(d) dans le cas où il résulte dudit contrôle (S30) que l'URI ne peut pas être utilisé pour l'établissement de connexion (S40), met fin à ladite tentative d'établissement de connexion (S50) et, en cas contraire, autorise la tentative d'établissement de connexion au dispositif serveur (S60), et
(e) dans le cas où le protocole WebSocket n'est pas utilisé pour la tentative d'établissement de connexion, autorise la tentative d'établissement de connexion au dispositif serveur (S60).

2. Procédé selon la revendication 1, lors duquel la surveillance des tentatives d'établissement de connexion (S10) est effectuée par un écouteur d'événements qui a été enregistré au niveau du dispositif client pour des événements établissements de connexion.

3. Procédé selon l'une quelconque des revendications précédentes, lors duquel le bloqueur de publicité (15) contrôle dans une étape (S31) si des tentatives d'établissement de connexion sont autorisées de manière générale et, dans le cas où ce contrôle est positif, autorise la tentative de connexion au dispositif serveur.

4. Procédé selon la revendication précédente, lors duquel dans le cadre du contrôle permettant de savoir si des tentatives d'établissement de connexion sont autorisées de manière générale, un identifiant univoque stocké dans le dispositif client (5) est transmis à un serveur tiers et un message de retour qui comprend une information indiquant si le contrôle est positif est reçu en tant que réponse audit identifiant univoque transmis, l'identifiant univoque comprenant un identifiant utilisateur.

5. Procédé selon l'une quelconque des revendications précédentes, lors duquel dans le cadre du contrôle (S30) permettant de savoir si l'URI de la tentative d'établissement de connexion peut être utilisé pour l'établissement de connexion est effectué un contrôle de filtrage global (S32) lors duquel est déterminé si l'URI remplit une ou plusieurs règles de filtrage globales (40) et, dans le cas où le résultat du contrôle de filtrage global est positif, est mis fin à la tentative d'établissement de connexion.

6. Procédé selon la revendication précédente, lors duquel dans le cadre du contrôle de filtrage global (S32), l'URI est transmis à un dispositif serveur dans lequel sont stockées les règles de filtrage globales (40) et un message qui comprend l'information indiquant si l'URI remplit une ou plusieurs règles de filtrage globales (40) est reçu en provenance dudit dispositif serveur.

7. Procédé selon l'une quelconque des revendications précédentes, lors duquel dans le cadre du contrôle (S30) permettant de savoir si l'URI de la tentative d'établissement de connexion peut être utilisé pour l'établissement de connexion est effectué un contrôle de filtrage local (S34) lors duquel est déterminé si l'URI remplit une ou plusieurs règles de filtrage locales (40a) et, dans le cas où le résultat du contrôle de filtrage local est positif, est mis fin à la tentative d'établissement de connexion, les règles de filtrage locales (40a) étant stockées dans le dispositif client (5).

8. Procédé selon la revendication 7, lors duquel le contrôle de filtrage global (S32) est effectué avant le contrôle de filtrage local (S34).

9. Procédé selon l'une quelconque des revendications précédentes, lors duquel le dispositif serveur comprend un serveur de moyens publicitaires (30a), une banque de données de moyens publicitaires (30b) et/ou un serveur socket (20), lesquels sont conçus pour établir une connexion par socket avec le dispositif client (5).

10. Procédé selon l'une quelconque des revendications précédentes, lors duquel le bloqueur de publicité (15) comprend un module d'extension, en particulier un module d'extension d'un navigateur internet et/ou une barre d'outils, en particulier une barre d'outils d'un navigateur internet.

11. Dispositif client (5) destiné à afficher des documents électroniques, en particulier des documents HTML, dans lequel ledit dispositif client comprend un bloqueur de publicité (15) qui est conçu de manière
(a) à surveiller des tentatives d'établissement de connexion effectuées depuis le dispositif client (5) vers un dispositif serveur (S10),
(b) lorsqu'une tentative d'établissement de connexion est détectée (S15), à déterminer si le protocole WebSocket est utilisé pour ladite tentative d'établissement de connexion,
(c) dans le cas où le protocole WebSocket est utilisé pour ladite tentative d'établissement de connexion, à contrôler pour l'identifiant uniforme de ressource, URI, de la tentative d'établissement de connexion si celui-ci peut être utilisé pour l'établissement de connexion (S30),
(d) dans le cas où il résulte dudit contrôle (S30) que l'URI ne peut pas être utilisé pour l'établissement de connexion (S40), à mettre fin à ladite tentative d'établissement de connexion (S50) et, en cas contraire, à autoriser la tentative d'établissement de connexion au dispositif serveur (S60), et
(e) dans le cas où le protocole WebSocket n'est pas utilisé pour la tentative d'établissement de connexion, à autoriser la tentative d'établissement de connexion au dispositif serveur (S60).

12. Dispositif client selon la revendication 11, dans lequel le bloqueur de publicité (15) est en outre conçu pour mettre en oeuvre le procédé selon l'une quelconque des revendications 2 à 10.

13. Dispositif de support de données avec des données stockées dessus ou une séquence de signaux représentant des données et apte à être transmise par internet, dans lequel lesdites données représentent un programme bloqueur de publicité (15) destiné à être exécuté sur un dispositif client (5) afin d'afficher des documents électroniques, le programme bloqueur de publicité étant conçu pour mettre en oeuvre un procédé selon l'une quelconque des revendications 1 à 10.
